# EUROPEAN PATENT SPECIFICATION

(11) **EP 0 410 530 B1**
(45) Date of publication and mention of the grant of the patent: **19.04.1995**
(21) Application number: 90202002.3
(22) Date of filing: 20.07.1990
(51) Int. Cl.: A01N 25/18

(54) **Dispenser for insect semiochemicals, method for the preparation thereof and method for the control of insects**
Spender für Insekten-Semio-chemikalien, Verfahren zu seiner Herstellung und Verfahren zur Insektenbekämpfung
Distributeur pour produits sémiochimiques d'insectes, son procédé de préparation et procédé de lutte contre les insectes

(30) Priority: 25.07.1989 NL 8901921
(43) Date of publication of application: 30.01.1991
(73) Proprietor: NEDERLANDSE ORGANISATIE VOOR TOEGEPAST-NATUURWETENSCHAPPELIJK ONDERZOEK TNO, 2595 CL Den Haag (NL)
(72) Inventor: Derks, Petrus Sigbertus Marinus,, NL-2651 SX Berkel en Roodenrijs, (NL)
(74) Representative: de Bruijn, Leendert C.

(56) References cited:
- EP-A- 0 252 463
- EP-A- 0 256 549
- EP-A- 0 305 139
- GB-A- 2 129 302
- GB-A- 2 141 932

## Description

The invention relates to a composition for the controlled distribution of semiochemicals.

Semiochemicals as referred to in the present specification comprise semiochemicals as they occur in nature, synthetic analoga thereof and synthetic repellents and attractants etc.

Semiochemicals are substances which play a natural role in the chemical communication of plants and animals. They can be divided into allelochemicals and pheromones according to the interspecific (between individuals of different species) or intraspecific (between individuals within a species) effect. Semiochemicals can be used for the control of undesired species, in particular when such substances can be prepared synthetically.

Semiochemicals for insects are particularly attractive agents for the control of insects, especially because of the high specificity, the small amounts required and the relative harmlessness for man and environment. The use of these compounds as insect control agents can be based on their attractiveness, for example in the form of sex pheromones, for the insects, in very low concentrations in vapour form. When the insects have been concentrated in this way, they can be eliminated, for example by mechanical, chemical or biological means. A semiochemical dispenser into which insects are lured on a small scale can also serve as an indicator of an imminent plague; in this way it can be determined when spraying with (conventional) insecticides must be carried out; by means of this targeted control, the consumption of insecticides can be reduced. Sex pheromones can also be used to disturb the communication between males and females and thus the reproduction of the insects.

For a cost-effective use of semiochemicals in insect control a long-term and virtually constant distribution of the semiochemicals is required. The relatively low stability of the compounds, in particular in sunlight, is one of the factors that make it difficult or not possible to meet these requirements.

European Patent Application 252,463 describes solid compositions wherein a non-cosmetic functional material such as a pheromone is entrapped in the lattice of a crosslinked, hydrophobic, comb-like polymer during in situ polymerization of monomers. The monomers are essentially mixed mono- and di-functional monomers, preferably mono- and di-(meth)acrylates and are normally polymerized using peroxides. The compositions are obtained as free flowing powders or beads only. This document does not describe a self dispensing composition for semiochemicals and furthermore it does not provide a solution for the problem of the sensitivity of many of the semiochemicals towards heat, light and radicals.

British Patent Application 2,141,932 describes a liquid or semi-liquid composition containing a pheromone or pheromone inhibitor and preferably a UV absorber, dissolved in a non-crosslinked polymer or copolymer matrix. In preparing the compositions according to this document, the pheromone is not present at the stage of polymerization but it is loaded into the matrix by dissolving the polymer and the pheromone in an organic solvent and subsequently evaporating the solvent. These known compositions are only shown to distribute pheromones at an appreciable level for several days.

British Patent Application 2,113,170 discloses agricultural pesticides which are in the form of microcapsules with a pesticide contained therein, which capsules are obtained by dispersing the agent in water which also contains the constituents for a polycondensation reaction, and subsequently subjecting these constituents to a polycondensation reaction. Pheromones are mentioned as possible pesticides. Disadvantages of these capsules are that they have only one specific form, that particular demands are made with regard to the solubility of the pesticide in water and that no solution is offered for the problem of the instability of semiochemicals.

EP-A-281,918 discloses crop protection preparations in which a crop protection agent is impregnated in a crosslinked polystyrene or polydivinylbenzene. Crop protection agents mentioned are, inter alia, pheromones. In this case, the active substance is added only after the polymerization, as a result of which the control of the release and the stabilization of, for example, the pheromone leave something to be desired.

In GB-A-2129302 a pheromone composition is proposed which is obtained by polymerising and crosslinking an acrylamide monomer in the presence of the pheromone and a radical initiator, without residues of the initiator being removed from the composition.

A means has now been found with which semiochemicals can be released into the environment over a long period and at an adjustable rate.

The composition according to the invention is characterized in that the composition contains the semiochemical enclosed in a network obtained by crosslinking a prepolymer containing acrylate or methacrylate groups, in such a way that the composition is substantially free of radical initiators.

The polymer network can be obtained by crosslinking a prepolymer which already contains the semiochemical and any auxiliaries required. By virtue of the characteristics of this polymer network, the dispenser for semiochemicals according to the invention has a number of advantages over the known means for the distribution of plague control and monitoring agents such as semiochemicals:
- the rate of release of the semiochemical can be varied in a simple manner by modifying the network density, the type of prepolymer and the degree of loading; a further control of the rate of release is possible by adding a diffusion-retarding layer;
- since there are virtually no mixing problems, the semiochemical can be very uniformly distributed through the composition;
- the shape of the dispenser is variable; the mixture can be brought into any shape before polymerization. As a result, the applicability of the composition distributing the semiochemical is appreciably widened, while, as a result, the rate of release can also be further controlled; after all, the surface area/volume ratio can be varied as desired;
- the stability of the semiochemicals can be increased in a simple manner in that all sorts of stabilizers, such as UV absorbers, antioxidants, colorants, pigments etc., can be incorporated in the dispenser in a simple manner;
- since the dispenser does not contain significant amounts of residues of initiators, such as photoinitiators and thermal initiators, the semiochemicals are not attacked by such initiators when the composition is exposed to light or heat, and thus their active life is lengthened.

The polymer network in which the pheromone is enclosed is a crosslinked polymer. The cross linked polymer is preferably obtained by crosslinking a prepolymer. The crosslinking can be physical, that is to say the prepolymer molecules are linked to one another by spatial interaction; preferably, however, the crosslinking is effected chemically, that is to say by forming bonds between groups of two prepolymer molecules in each case. Suitable prepolymers are polyalkenes, polyethers, polyesters and like prepolymers having a relatively low degree of polymerization, to which the crosslinkable groups are bonded. Advantageously, these crosslinkable groups are acrylate groups or methacrylate groups.

The most suitable type of curing is determined in the main by the nature, in particular the vulnerability, of the semiochemical which is present in the composition, and by the process costs for the curing. Preferably, the composition is cured by means of gamma irradiation or electron beam treatment. These methods do not require initiator substances, and therefore stabilizers, such as UV absorbers which would otherwise interfere with the crosslinking process, can already be present in a high concentration in the composition mixture before curing.

The composition preferably contains a stabilizer for the semiochemical, in particular a substance which absorbs UV radiation. The presence of a UV absorber is desirable in many cases since sunlight can cause a geometrical isomerization or other conversion of the active substance, which can lead to the semiochemical being inactivated or even having an opposite action. Other auxiliaries, such as antioxidants and/or pigments, can also be present.

As indicated above, the dispenser can have any desired shape. It can be in the form of small blocks which contain the desired amount of semiochemical, strips from which a piece containing a desired amount of active substance can simply be cut off, granules, coatings on a suitable support, and the like. The dispenser can also be covered with a layer which has limited permeability for the semiochemical and thus retards the release as necessary.

The composition can contain the semiochemical in any desired concentration provided that there is still a polymer network. In general, the concentration will be between 1 and 50%, depending on the shape of the dispenser, the desired rate of release and other factors.

All naturally occurring and synthetic semiochemicals can be used for distribution by means of the dispensers according to the invention. Apart from naturally occurring semiochemicals, analogous synthetic compounds having a comparable of enhanced effect can be used in the dispensing composition according to the invention. The majority of pheromones are relatively simple organic compounds. Frequently they contain a carbon skeleton which is not branched or slightly branched or they have a terpene-like structure. Usually one or more double C-C bonds, and frequently also an oxygen-containing function such an alcohol, aldehyde, epoxide or ester, are present. Examples are cis-7,8-epoxy-2-methyloctadecane, the sex pheromone of the gypsy moth, Lymantria dispar; cis-7-trans-11-hexadecadienyl acetate, the sex pheromone of the cereal moth, Sitotroga cerealella; trans-8-trans-10-dodecadienol, the sex pheromone of the codling moth, Laspeyresia pomonella; a mixture of cis-9- and cis-11-tetradecenyl acetate, the sex pheromone of the summer fruit tortrix moth Adoxophyes orana; and cis-9-tricosene, the sex/aggregation pheromone of the domestic fly, Musca domestica. A review of pheromones can be found, for example, in Attractants and Pheromones of Noxious Insects W.P.R.S. Bulletin, 1984/VII/1, compiled by A.K. Minks.

The invention also relates to a method for the preparation of a composition for the controlled distribution of semiochemicals.

The method is characterized in that a prepolymer is mixed with the semiochemical and, if required, with auxiliaries and stabilizers and the mixture is then crosslinked. In order to obtain a composition which is substantially free of initiator residues, the crosslinking is either effected by means of gamma radiation or an electron beam, or by means of UV radiation or heat in the presence of a radical initiator, in which case the residues of the initiator are subsequently selectively removed by solvent extraction. The prepolymer is a prepolymer containing (meth)acrylate groups, as described above. During crosslinking the network is formed in which the active substance is enclosed. Crosslinking using UV irradiation or heat has the advantage that these methods are relatively inexpensive because no expensive equipment is required. A disadvantage of using UV or heat can be that some pheromones are sensitive to UV light or heat, either directly or via the initiator present. In the case of vulnerable pheromones, this can lead to the conversion of the active form to a less active or inactive form, which results in a reduction in the activity of the dispenser. In the case of other semiochemicals, some of which are also less vulnerable, the active form can be converted into a form which counteracts the active form, so that even with a low degree of conversion there is a greatly reduced action.

This problem can be avoided by carrying out the crosslinking using UV or heat in the presence of an initiator which is selectively extracted after polymerization. When the semiochemical is an apolar or weakly polar substance, such a selective extraction can be achieved by using a polar initiator. In this case the residues, i.e. the conversion products and the unconverted starting material, of the initiator are removed from the cross linked composition by extraction with the polar solvent. Examples of polar solvents are dimethylformamide, dimethyl sulfoxide and the like, mixtures of these solvents with water, alcohol-water mixtures, and in particular water. Water soluble UV initiators are, for example, aryl ketones substituted by ionic groups such as ammonium groups, or by non-ionic, polar groups such as hydroxy groups. Examples are the commercial products Quantacure BTC (Ibis) = (4-benzoylbenzyl)-trimethylammonium chloride, and Darocur 2959 (Merck) = 4-(2-hydroxyethoxy)phenyl (1-hydroxy-1-methylethyl) ketone. In an exceptional case, a weakly polar or non-polar solvent can also be used for extraction if the semiochemical is sparingly soluble and the initiator is readily soluble therein.

Whether or not it is advantageous to use UV irradiation or thermal energy for the crosslinking therefore depends in the main on the nature of the semiochemical.

In general, crosslinking using electron beams, and especially gamma rays, is preferred in the case of vulnerable semiochemicals, because this method of crosslinking on the one hand, inter alia because of the absence of initiators, causes little damage to the active substance and, on the other hand, UV absorbers and other stabilizers can be added thereto without objection and in virtually unlimited amounts.

The rate of release of the semiochemical from the composition according to the invention can be predetermined by adjusting one or more of various parameters, such as the network density, the type of prepolymer, the concentration of the semiochemical, the shape of the composition (surface area/ volume ratio) and the like, as is illustrated in more detail in the examples. The rate of release is, of course, also dependent on the vapour pressure and the rate of migration of the semiochemical inside the polymer. If the semiochemical has a low vapour pressure, for example, the concentration in the dispenser will be made high, a flexible prepolymer and a relatively light crosslinking will be used and a high surface area/volume ratio will be set (films, coatings). If the semiochemical has a high vapour pressure, these parameters will be chosen to be precisely the opposite or, for example, a layer which has poor permeability for the semiochemical will be applied to the dispenser. External factors which have an influence on the rate of release are the temperature and, to a very small extent, the wind speed. Depending on the limiting conditions, a dispenser having the desired distribution characteristics can be obtained in all cases by an appropriate choice of parameters. These characteristics show a high degree of constancy over a prolonged period, which in every case is long enough to cover an entire season of, for example, four months.

Depending on the type of semiochemical chosen, the insect control can be based on disturbing the communication between female and male insects, as a result of which reproduction is impeded, or on the lure action, as a result of which the insects are lured into a trap in order to be eliminated or to be used as an indicator for spraying the crop with insecticides.

### Example 1: Influence of the type of prepolymer on the release rate.

### Constituents:

90 w/w % prepolymer
10 w/w % E8, E10-dodecadienyl alcohol
(Sex pheromone (Codlemone) of the codling moth Laspeyresia pomonella, Siegried Ltd.)

### Method:

- mix constituents;
- pour into a glass mold with a 400 »m spacer;
- cure: 1 Mrad gamma;
- measure initial rate of release (see below).

The results are given in table A.

**Table A**

| Experiment No. | Prepolymer | | | | Initial rate of release [»g/cm² hour] |
|---|---|---|---|---|---|
| | Trade name | Functionality | Molecular weight | Type | |
| 1 | PE-6100-IEM | 2 | 2300 | Aliphatic/ether | 5.5 |
| 2 | EBC-270 | 2 | 1500 | Aliphatic | 3.0 |
| 3 | PE-10.100-IEM | 2 | 3900 | Aliphatic/ether | 1.8 |
| 4 | PE-6400-IEM | 2 | 3200 | Aliphatic/ether | 1.8 |
| 5 | Actilane-27 | 1.7 | ? | Aliphatic | 1.1 |
| 6 | EBC-4883 | 2 | 1600 | ? | 0.55 |
| 7 | Actilane-20 | 1.6 | ? | Aliphatic/ester | 0.33 |
| 8 | Photomer-4028 | 2 | ? | Aromatic | 0.18 |
| 9 | Actilane-18 | 2 | ? | Aromatic/ester | 0.16 |
| 10 | Photomer-6261 | 6 | 1250 | Aromatic | 0.020 |
| 11 | EBC-4858 | 2 | 500 | ? | 0.002 |
| 12 | EBC-220 | 6 | 1150 | Aromatic | 0.000 |

### Remarks:

Prepolymers 1, 3 and 4 are synthesized by CPM-TNO. They are Pluronics (Pluronic PE 6100, PE 10100 and PE 6400 respectively from BASF) methacrylated with the aid of isocyanate/ethyl methacrylate; for method see M.R. Thomas, Journal of Coatings Technology, 55 (703), pp. 998-1007 (1983). The others are commercial acrylates (UCB, SNPE, Diamond Shamrock).

The initial rate of release is measured as follows: air is passed at a specific rate and temperature over the pheromone dispenser, after which this stream of air is passed through a filter where the pheromone is captured (quantitatively) again (in the course of 2 hours). The amount of pheromone is determined by extraction of the filter followed by gas chromatographic measurement.

Factors which determine the release of the pheromone:
- network density
   polymers with a high network density (high functionality and/or low molecular weight of the prepolymer; such as Nos. 10, 11, 12) have a low rate of release;
- flexibility of polymer chains
   (flexible) aliphatic polymers have a higher rate of release than (rigid) aromatic polymers.

### Example 2: Accelerated ageing test

The pheromone preparations were subjected to an exposure in accordance with DIN 53,387. The exposure was carried out in a Xenotest 1200 U UV ageing apparatus under the following conditions:

| | |
|---|---|
| Apparatus | Xenotest 1200 U (Original Hanau Quarzlampen Gmbh) |
| Light source | 3 x 4500 W Xenon lamps |
| UV filter system | 2/3 "Drittelschalen UV-Spezialglas" |
| Light intensity | 90 ± 5 W/m² |
| Internal air temperature | 30°C |
| Black plate temperature | 45 ± 3°C |
| Relative humidity | 65 ± 5% |
| Irrigation | 3 min. per 20 min., demineralized water |
| Irradiation | Intermittent 50/50 (alternating) |

The "accelerated ageing/outdoor exposure" acceleration factor is determined by the nature and composition of the exposed material as well as by the exposure conditions. In principle, this factor therefore must be determined for each material.

It is found that for polymers a 300 hour test under the said conditions is equivalent overall to the effect of a continuous outdoor exposure at an angle of 45°C to the south for 1 year (moderate West European climate).

### Composition:

PE-6100-IEM (see Example 1, test 1) with 10 w/w % E8,E10-dodecadienyl alcohol

### Method:

- mix constituents, with Irgacure 651 (UV initiator, product of Ciba-Geigy) or Gafsorb 2H4M (UV absorber, product of Gaf) if appropriate;
- cure (UV, gamma); 2 x 7 x 30 mm;
- expose to accelerated ageing;
- determine residual amount of active substance in the preparation.

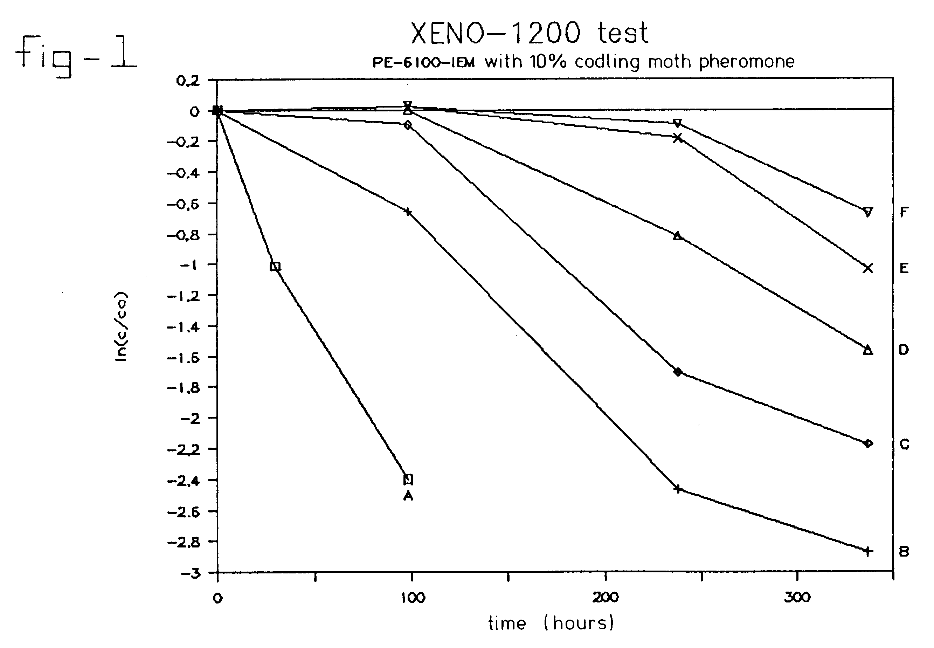

The results are shown in Figure 1 in the form of ln Cₜ/Cₒ, where Cₜ = concentration at measurement time and Cₒ = initial concentration. The codes used in Figure 1 are explained in Table B.

**Table B**

| Code | Curing | Additive |
|---|---|---|
| A | 2 x 2 min. UV using lamp type HPA-2000 (Philips) | 2 w/w % Irgacure 651 |
| B | 1 Mrad gamma | 0 |
| C | 1 Mrad gamma | 0.041 w/w % Gafsorb 2H4M |
| D | 1 Mrad gamma | 0.094 w/w % Gafsorb 2H4M |
| E | 1 Mrad gamma | 0.330 w/w % Gafsorb 2H4M |
| F | 1 Mrad gamma | 1.018 w/w % Gafsorb 2H4M |

### Remark:

In addition to degradation of the pheromone, release of course also occurs.

### Conclusion:

This pheromone can be much better protected against UV degradation in gamma-cured preparations. The inherent stability is already better in gamma-cured formulations (test B compared with test A), which presumably is due to the fact that no photoinitiator has to be used in this case. Furthermore, with this type of curing (an unlimited amount of) UV absorbers can be added, as a result of which the stability of the pheromone can be further increased (tests C-F).

### Example 3: Biological tests on the codling moth.

### Constituents:

88 w/w % PE-6100-IEM
10 w/w % Codlemone (see example 1)
1 w/w % Gafsorb 2H4M (Gaf)
1 w/w % Irganox 1010 (antioxidant from Ciba-Geigy)

### Method:

- mix constituents;
- pour into a glass mould which contains glass mats to reinforce the final dispenser (to be stapled on a stake);
- cure; 1 Mrad Gamma;
- pheromone dispensers from the field are analysed every week to determine the rate of release under standard conditions (temperature 15°C, wind speed 1.5 m/s).

### Results:

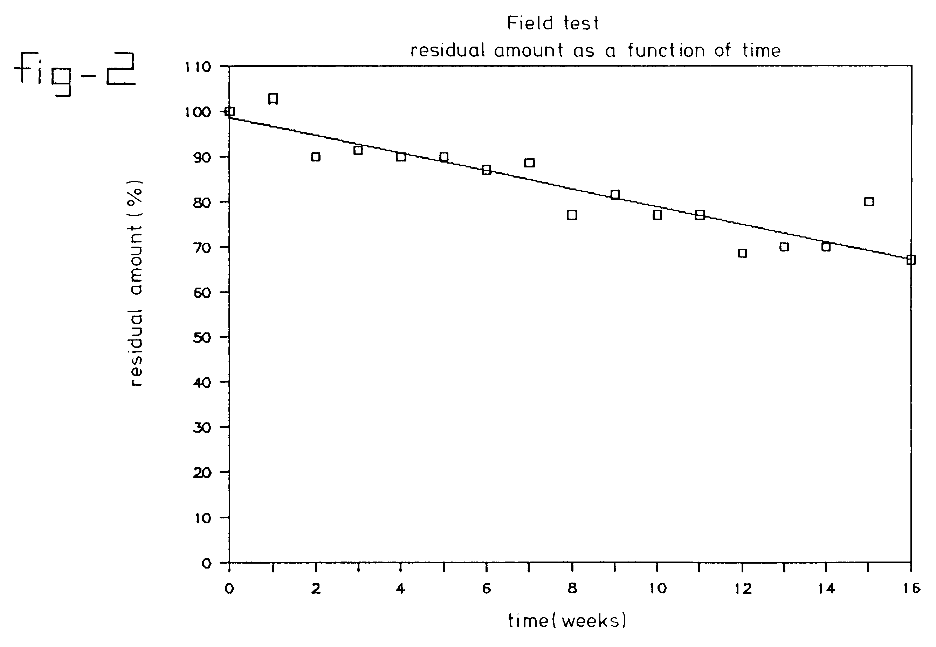

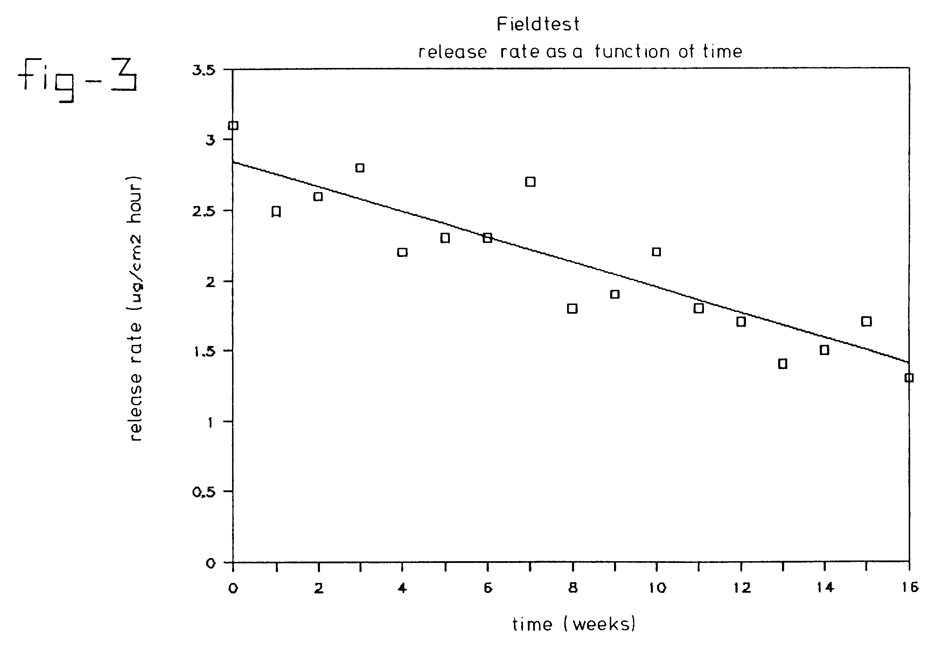

Rate of release and residual amount: see Figures 2 and 3 (each point is an average of 4 measurements). Remarks:
Field tests were also carried out with UV-cured preparations. The pheromone was found to degrade rapidly in these dispensers (only 10% remained after 3 weeks). This can be ascribed to a degradation under the influence of UV in combination with the presence of the curing initiator (residues). On irradiation with UV (sunlight) the initiator generates radicals which presumably react with the unsaturated bonds in the pheromone.

### Field test

### Method:

15-20 grams Codlemone/ha formulated as described above.
Half of each of two fields (1 and 3 ha) was treated (90 1.5 x 4 x 0.3 cm dispensers/ha).
Trap catches are measured in a trap containing standard pheromone dispenser (polythene tubes filled with pheromone).
The results are given in table C.

**Table C**

| Field | Trap catches (average of 12 traps) | | |
|---|---|---|---|
| | Untreated | Treated | Reduction (%) |
| 1 | 9.0 | 0.9 | 90 |
| 2 | 2.67 | 0.08 | 97 |

### Conclusion:

A catch reduction of more than 90% is observed when 20 grams of pheromone are used per hectare. This shows that these dispensers are suitable for the confusion technique.

### Example 4: Biological tests on summer fruit tortrix moths (Adoxophyes orana).

### Constituents:

88 w/w % PE-6100-IEM
10 w/w % Z9/Z11-tetradecenyl acetate 9/1
1 w/w % Gafsorb 2H4M
1 w/w % Irganox 1010

### Method:

- mix constituents;
- pour into a glass mould containing glass mats in order to reinforce the final dispenser (to be stapled on a stake);
- cure; 1 Mrad Gamma;
- this pheromone is much less sensitive to conversion by UV light. However, conversion, under the influence of UV light, to the geometric isomer results in an appreciable reduction in the lure effect. This lure effect is determined by testing dispensers in traps. By comparing fresh and old dispensers an impression of the stability of the pheromone in these dispensers can be obtained;
- trap catches with fresh dispensers are compared with those of three week-old dispensers.

The results are given in table D.

**Table D**

| Dispenser | Trap catches (average of 4 traps) | | |
|---|---|---|---|
| | New | Old | Reduction (%) |
| According to the invention | 7.5 | 5.8 | 23 |
| PE tube | 2.5 | 0.0 | 100 |

### Conclusion:

The summer fruit tortrix moth pheromone can also be protected against conversion by incorporating it in the above-mentioned preparation.

### Example 5: Influence of the degree of crosslinking on the rate of release.

### Constituents:

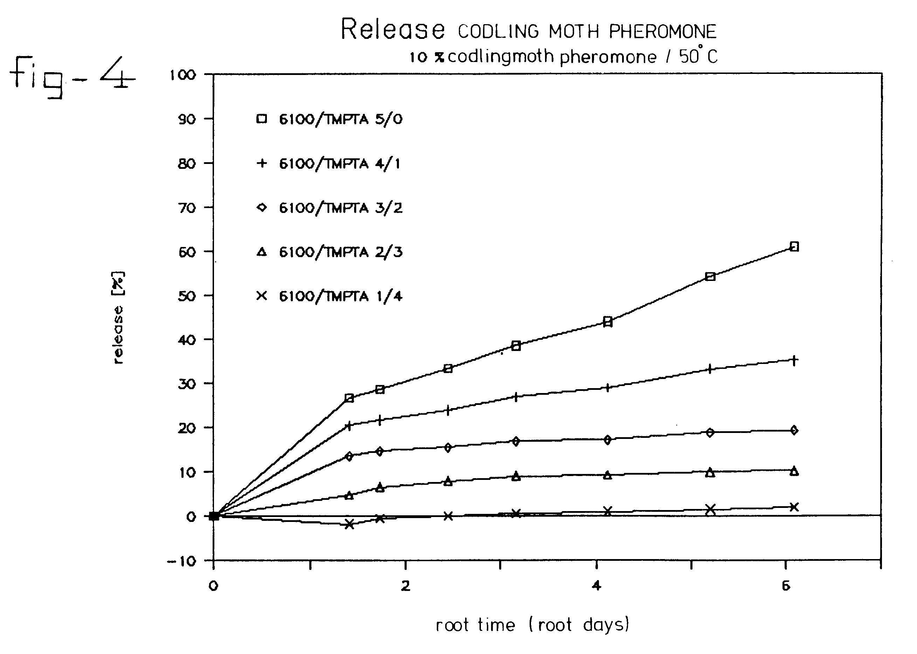

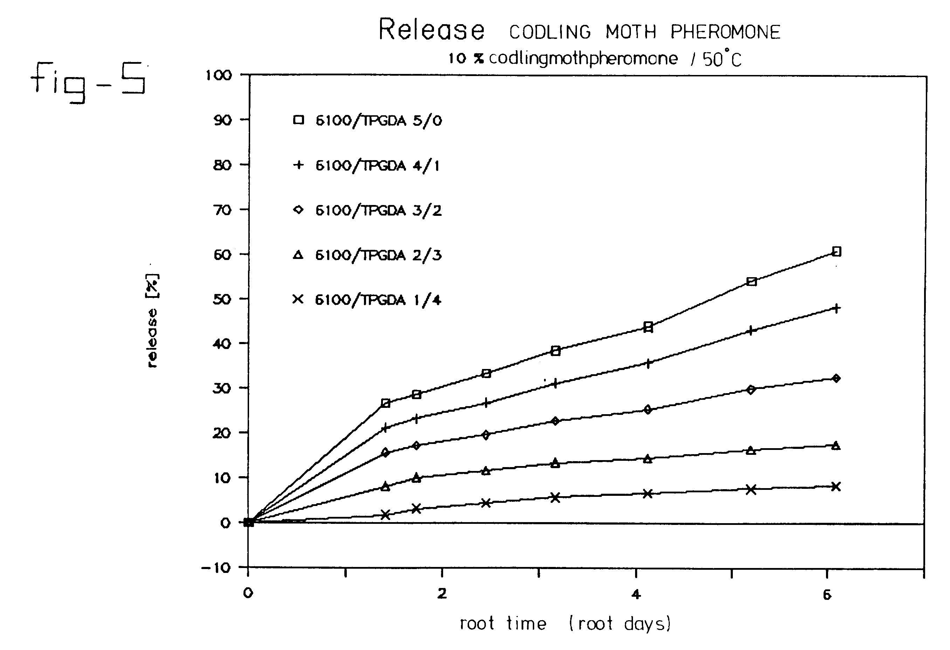

10 w/w % E8,E10-dodecadienyl alcohol
90 w/w % prepolymer/crosslinking agent
The prepolymer used is PE-6100 methacrylate.
This prepolymer is synthesized by CPM-TNO by transesterification of ethyl methacrylate with Pluronic PE 6100 (BASF); see C.B. Rybny, C.A. DeFazio, J.K. Shahidi, J.C. Trebellas, J.A. Vona, Journal of Paint Technology 46 (596), pp. 60-69 (1974).
The crosslinking agent used is trimethylolpropane triacrylate (TMPA; UCB) and tripropylene glycol diacrylate (TPGDA; UCB).
The prepolymer/crosslinking agent ratio is indicated in Figures 4 and 5.

### Method:

- mix constituents;
- pour into glass mould; discs with a diameter of 43 mm and a thickness of 3.3 mm;
- cure; 3 Mrad gamma
- measure the pheromone release at 50°C by determining the loss in weight with time.

The results are given in Figures 4 and 5.

By increasing the network density of the polymer network by mixing in crosslinking agents, the rate of release can be lowered as desired. Mixing in a trifunctional crosslinking agent (TMPTA) lowers the release to a greater extent than does a bifunctional cross linking agent (TPGDA).

### Example 6: Influence of the degree of loading on the rate of release.

### Constituents:

x w/w % E8,E10-dodecadienyl alcohol
100-x w/w % PE-6100 methacrylate/TMPTA 1/1
(For more data on these components: see Example 5)

### Remark:

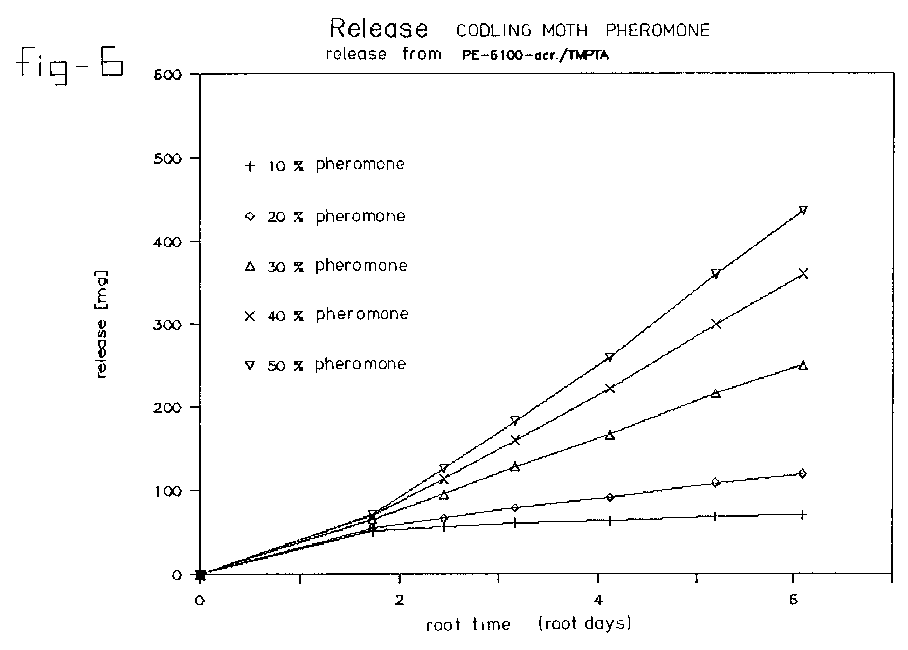

x is varied as is indicated in Figure 6.

### Method:

- mix constituents;
- pour into glass mould; discs with a diameter of 43 mm and a thickness of 3.3 mm;
- cure: 3 Mrad gamma;
- measure the pheromone release at 50°C by determining the loss in weight with time.

The results are shown in Figure 6.

By increasing the degree of loading the absolute amount of pheromone released by the dispenser becomes higher. This shows that the release can also be controlled by means of the degree of loading.

### Example 7: Composition cured with electron beam (EB).

### Constituents:

90 w/w % PE-6100-methacrylate (synthesis as described in example 5)
10 w/w % E8, E10-dodecadienyl alcohol.

### Method:

- mix constituents;
- spread a 200 »m layer on aluminium foil;
- cure: 55 Mrad EB (using Electrocurtain EB 175 from ESI).

### Result:

Initial release rate is 3 »g/cm² per hour.

### Example 8: Selective extraction of photo-initiator from a UV cured composition.

### Constituents:

88 w/w % PE-6100-methacrylate (synthesis as described in example 5)
2 w/w % Darocur 2959 = 4-(2-hydroxyethoxy)phenyl (1-hydroxy-1-methylethyl) ketone, a water soluble photo-initiator from E. Merck
10 w/w % E8,E10-dodecadienyl alcohol.

### Method:

- mix constituents;
- pour into glass mould (2 x 6 x 25 mm);
- cure: 2 Mrad gamma;
- extract with water: dispenser is placed in water for two weeks (50 grams water per gram dispenser, water reniewed every two days);
- exposed to accelerated ageing (see example 2);
- determine residual amount of active substance in the composition.

### Results:

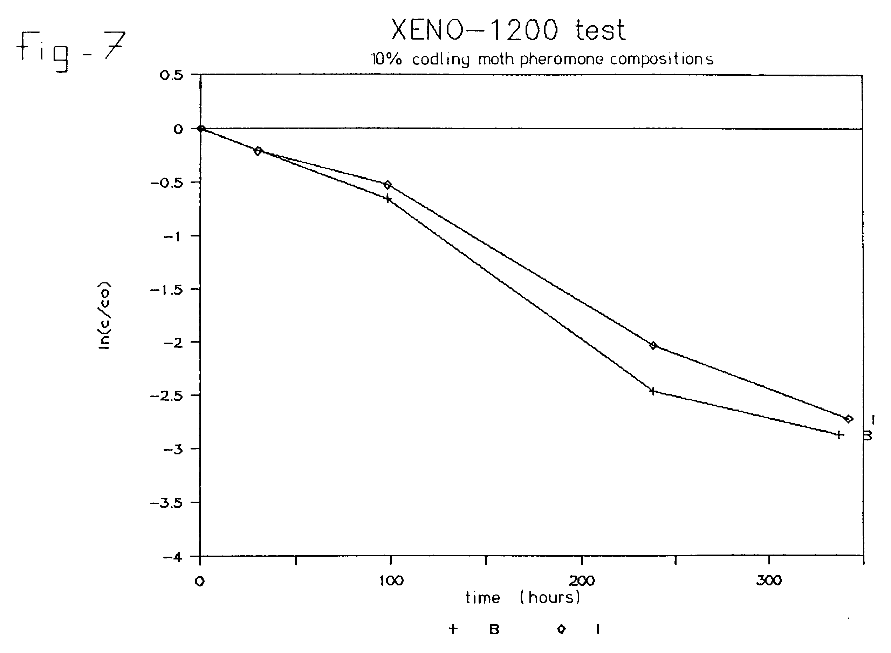

The results are shown in figure 7 in a similar way as in example 2. In this figure, the above-described composition (code I) is compared with gamma cured material (code B). It shows that selective extraction of the photo-initiator provides a system wherein the pheromone has a comparable stability as in a gamma cured composition. It may be noted, however, that smaller amounts of UV-absorbers can be added to UV curable compositions for further increasing the stability of the pheromone.

## Claims

1. Composition for the controlled distribution of a semiochemical in vapour form, wherein said composition contains the semiochemical enclosed in a network obtained by crosslinking a prepolymer containing acrylate or methacrylate groups in such a way that the composition is substantially free of radical initiator residues.

2. Composition according to Claim 1, wherein said composition also contains a substance which absorbs UV radiation.

3. Composition according to Claim 1 or 2, wherein said composition also contains one or more other stabilizers and/or pigments.

4. Composition according to one of Claims 1-3, wherein said composition has been shaped.

5. Composition according to one of Claims 1-3, wherein said composition is present as a layer on a solid carrier.

6. Composition according to one of Claims 1-5, wherein said semiochemical is a pheromone.

7. Composition according to one of Claims 1-6, wherein said composition has been obtained by gamma irradiation curing or electron beam curing.

8. Method for preparing a composition for the controlled distribution of a semiochemical, said composition containing the semiochemical enclosed in a network and being substantially free of radical initiator residues, wherein a prepolymer is mixed with the semiochemical and optional auxiliaries and stabilizers and the mixture is crosslinked by means of gamma radiation or an electron beam.

9. Method according to Claim 8, wherein the crosslinking is effected by means of gamma radiation.

10. Method for preparing a composition for the controlled distribution of a semiochemical, said composition containing the semiochemical enclosed in a network and being substantially free of radical initiator residues, wherein a prepolymer is mixed with the semiochemical, a radical initiator and optional auxiliaries and stabilizers, the mixture is crosslinked by means of UV radiation or heat and the residues of the initiator are subsequently removed by solvent extraction.

11. Method according to Claim 10, wherein the semiochemical is substantially insoluble in a polar solvent and the initiator is substantially soluble in a polar solvent.

12. Method according to one of Claims 8-11, wherein the prepolymer contains crosslinkable acrylate and/or methacrylate groups.

13. Method for controlling insects, wherein a composition according to one of Claims 1-7 or obtained in accordance with one of Claims 8-12 is used.

## Patentansprüche

1. Zusammensetzung für die gesteuerte Verteilung einer Semiochemikalie in Dampfform, wobei die Zusammensetzung die Semiochemikalie in einem Netzwerk eingeschlossen enthält, das durch Vernetzung eines Acrylat- oder Methacrylatgruppen enthaltenden Vorpolymerisats in solcher Weise erhalten wurde, daS die Zusammensetzung im wesentlichen frei von Radikalinitiatorrückständen ist.

2. Zusammensetzung nach Anspruch 1,
wobei die Zusammensetzung auch einen Stoff enthält, der UV-Strahlung absorbiert.

3. Zusammensetzung nach Anspruch 1 oder 2,
wobei die Zusammensetzung auch ein(en) oder mehrere andere Stabilisatoren und/oder Pigmente enthält.

4. Zusammensetzung nach einem der Ansprüche 1-3,
wobei die Zusammensetzung geformt wurde.

5. Zusammensetzung nach einem der Ansprüche 1-3,
wobei die Zusammensetzung als Schicht auf einem festen Träger vorliegt.

6. Zusammensetzung nach einem der Ansprüche 1-5,
wobei die Semiochemikalie ein Pheromon ist.

7. Zusammensetzung nach einem der Ansprüche 1-6,
wobei die Zusammensetzung durch Gammastrahlungsaushärtung oder Elektronenstrahlaushärtung erhalten wurde.

8. Verfahren zur Herstellung einer Zusammensetzung für die gesteuerte Verteilung einer Semiochemikalie, welche Zusammensetzung die Semiochemikalie in einem Netzwerk eingeschlossen enthält und im wesentlichen frei von Radikalinitiatorrückständen ist, bei dem ein Vorpolymerisat mit der Semiochemikalie und fakultativen Hilfsstoffen und Stabilisatoren gemischt wird und die Mischung mittels Gammastrahlung oder eines Elektronenstrahls vernetzt wird.

9. Verfahren nach Anspruch 8,
bei dem die Vernetzung mittels Gammastrahlung durchgeführt wird.

10. Verfahren zur Herstellung einer Zusammensetzung für die gesteuerte Verteilung einer Semiochemikalie, welche Zusammensetzung die Semiochemikalie in einem Netzwerk eingeschlossen enthält und im wesentlichen frei von Radikalinitiatorrückständen ist, bei dem ein Vorpolymerisat mit der Semiochemikalie, einem Radikalinitiator und fakultativen Hilfsstoffen und Stabilisatoren gemischt wird, die Mischung mittels UV-Strahlung oder Hitze vernetzt wird und die Rückstände des Initiators anschließend durch Lösungsmittelextraktion entfernt werden.

11. Verfahren nach Anspruch 10,
bei dem die Semiochemikalie in einem polaren Lösungsmittel im wesentlichen unlöslich ist und der Initiator in einem polaren Lösungsmittel im wesentlichen löslich ist.

12. Verfahren nach einem der Ansprüche 8-11,
bei dem das Vorpolymerisat vernetzbare Acrylat- und/oder Methacrylatgruppen enthält.

13. Verfahren zum Regulieren von Insekten,
bei dem eine Zusammensetzung nach einem der Ansprüche 1-7 oder eine nach einem der Ansprüche 8-12 erhaltene verwendet wird.

## Revendications

1. Composition pour la distribution contrôlée d'une substance semiochimique sous forme vapeur, où ladite composition contient la substance semiochimique incluse dans un réseau obtenu par réticulation d'un prépolymère contenant des groupes acrylate ou méthacrylate, de telle façon que la composition soit essentiellement dépourvue de résidus d'initiateurs radicalaires.

2. Composition selon la revendication 1, où ladite composition contient également une substance qui absorbe le rayonnement UV.

3. Composition selon la revendication 1 ou 2, où ladite composition contient également un ou plusieurs autres stabilisants et/ou pigments.

4. Composition selon l'une quelconque des revendications 1-3, où ladite composition a été façonnée.

5. Composition selon l'une quelconque des revendications 1-3, où ladite composition est présente sous la forme d'une couche sur un support solide.

6. Composition selon l'une quelconque des revendications 1-5, où ladite substance semiochimique est une phéromone.

7. Composition selon l'une quelconque des revendications 1-6, où ladite composition a été obtenue par durcissement à l'aide de rayonnement gamma ou par durcissement à l'aide d'un faisceau électronique.

8. Procédé de préparation d'une composition pour la distribution contrôlée d'une substance semiochimique, ladite composition contenant la substance semiochimique incluse dans un réseau et étant essentiellement dépourvue de résidus d'initiateurs radicalaires, dans lequel un prépolymère est mélangé à la substance semiochimique et à des adjuvants et stabilisants optionnels, et le mélange est réticulé au moyen de rayonnement gamma ou d'un faisceau électronique.

9. Procédé selon la revendication 8, dans lequel la réticulation est réalisée au moyen de rayonnement gamma.

10. Procédé de préparation d'une composition pour la distribution contrôlée d'une substance semiochimique, ladite composition contenant une substance semiochimique incluse dans un réseau et étant essentiellement dépourvue de résidus d'initiateurs radicalaires, dans lequel un prépolymère est mélangé à la substance semiochimique, à un initiateur radicalaire et à des adjuvants et stabilisants optionnels, le mélange est réticulé au moyen de rayonnement UV ou de chaleur et les résidus de l'initiateur sont éliminés ultérieurement par extraction au solvant.

11. Procédé selon la revendication 10, dans lequel la substance semiochimique est essentiellement insoluble dans un solvant polaire et l'amorceur est essentiellement soluble dans un solvant polaire.

12. Procédé selon l'une quelconque des revendications 8-11, dans lequel le prépolymère contient des groupes acrylate et/ou méthacrylate réticulables.

13. Procédé de lutte contre des insectes, dans lequel on utilise une composition selon l'une quelconque des revendications 1-7 ou obtenue selon l'une des revendications 8-12.
